# EUROPEAN PATENT APPLICATION

(11) **EP 4 749 601 A1**
(43) Date of publication of application: **27.05.2026**
(21) Application number: 24845957.0
(22) Date of filing: 19.07.2024
(51) Int. Cl.: G08G 5/00, G01C 23/00, G01C 21/00, B64F 1/22, G01W 1/02, G06Q 50/40, E04H 6/44

(54) **VERTIPORT ENTRY/EXIT DIRECTION MANAGEMENT METHOD AND DEVICE**

(30) Priority: 21.07.2023 KR 20230095391; 15.12.2023 KR 20230183609; 28.03.2024 KR 20240042364; 28.03.2024 KR 20240042365; 28.03.2024 KR 20240042366
(71) Applicant: Hyundai Elevator Co., Ltd., Chungju-si, Chungcheongbuk-do (KR)
(72) Inventor: KIM, Hyun Goo, Chungju-si Chungcheongbuk-do 27329 (KR); KIM, Du Hyun, Chungju-si Chungcheongbuk-do 27329 (KR)
(74) Representative: Baldus, Oliver
(86) International application number: PCT/KR2024/010480
(87) International publication number: WO 2025/023655

(57) **Abstract**

A corridor management method is disclosed. The corridor management method includes: determining a corridor for an urban air mobility (UAM) aircraft, wherein the corridor includes a destination vertiport of the UAM aircraft; transmitting the determined corridor to the UAM aircraft; receiving an event around the destination vertiport from the destination vertiport; determining an approach direction of the UAM aircraft to the destination vertiport based on the received event; and transmitting the determined approach direction to the UAM aircraft.

## Description

### [Technical Field]

The present disclosure relates to a method and apparatus for managing approach/departure directions to/from a vertiport.

### [Background Art]

With increasing saturation of urban traffic, there is a growing push to adopt urban air mobility (UAM). Operation of UAM aircraft requires airfields, such as vertiports. To establish stable flight paths (corridors) for UAM aircraft, a provider of services for UAM (PSU) may manage UAM corridors by taking into account factors such as weather conditions (for example, precipitation status, rainfall amount, wind direction, wind speed, and the like), path obstacles (for example, nearby facilities and the like), and prohibited airspace. However, the PSU does not manage the approach or departure direction of UAM aircraft relative to a vertiport, based on dynamic information around the vertiport. The following documents are incorporated by reference herein in their entirety.
Korean Patent Laid-open Publication No. 10-2023-0078097
Korean Patent Laid-open Publication No. 10-2023-0060864
Korean Patent Laid-open Publication No. 10-2022-0160413
Korean Patent Laid-open Publication No. 10-2022-0013030
Korean Patent Laid-open Publication No. 10-2022-0013030
Korean Patent Laid-open Publication No. 10-2024-0015292
Korean Patent Registration Publication No. 10-2445617
Korean Patent Registration Publication No. 10-2556077
Korean Urban Air Mobility (K-UAM) Operational Concept 1.0.pdf

### [Disclosure]

### [Technical Problem]

Embodiments of the present disclosure provide a method and apparatus for managing approach/departure directions of an urban air mobility (UAM) aircraft to/from a vertiport using dynamic events (for example, time-varying information) around the vertiport.

### [Technical Solution]

In accordance with one aspect of the present disclosure, a method for managing approach/departure directions of an urban air mobility (UAM) aircraft includes: determining a corridor for the UAM aircraft, wherein the corridor includes a destination vertiport of the UAM aircraft; transmitting the determined corridor to the UAM aircraft; receiving an event around the destination vertiport from the destination vertiport; determining an approach direction of the UAM aircraft to the destination vertiport based on the received event; and transmitting the determined approach direction to the UAM aircraft.

In one embodiment, the event may include a real-time floating population around the destination vertiport.

In one embodiment, the event may include at least one of wind speed and wind direction around the destination vertiport.

In one embodiment, the event may include flight obstacles impeding flight of the UAM aircraft.

In one embodiment, a surrounding area of the destination vertiport may be divided into a plurality of areas, and the event may be collected for each of the plurality areas.

In one embodiment, the step of determining an approach direction to the destination vertiport may include determining the approach direction such that the UAM aircraft passes over one of the plurality of areas.

In one embodiment, the step of transmitting the determined approach direction to the UAM aircraft may include transmitting the determined approach direction to the UAM aircraft through a UAM operator.

In one embodiment, the step of transmitting the determined corridor to the UAM aircraft may include transmitting the determined corridor to the UAM aircraft through the UAM operator.

In one embodiment, the destination vertiport includes a plurality of take-off and landing areas, wherein the method may further include: determining a destination take-off and landing area among the plurality of take-off and landing areas; and notifying the UAM aircraft of the determined destination take-off and landing area.

In one embodiment, the destination vertiport includes a plurality of take-off and landing areas, wherein the method may further include: receiving a destination take-off and landing area among the plurality of take-off and landing areas; and notifying the UAM aircraft of the determined destination take-off and landing area.

In one embodiment, the method may further include: transmitting the determined approach direction to the destination vertiport.

In one embodiment, the method may be performed by a provider of services for UAM (PSU).

In accordance with another aspect of the present disclosure, a provider of services for UAM includes: an information collection unit configured to collect information about a departure vertiport and a destination vertiport and information about terrain, obstacles, and weather between the departure vertiport and the destination vertiport; a flight plan establishment unit configured to determine a corridor for a UAM aircraft that connects the departure vertiport to the destination vertiport based on the information collected by the information collection unit; and a communication device configured to transmit the determined corridor to the UAM aircraft. The information collection unit is further configured to receive an event around the destination vertiport from the destination vertiport after determination of the corridor connecting the departure vertiport to the destination vertiport, and the flight plan establishment unit is further configured to determine an approach direction of the UAM aircraft to the destination vertiport based on the received event.

In one embodiment, the event may include a real-time floating population around the destination vertiport.

In one embodiment, the event may include at least one of wind speed and wind direction around the destination vertiport.

In one embodiment, the event may include flight obstacles impeding flight of the UAM aircraft.

In one embodiment, the communication device may be configured to notify at least one of the UAM aircraft and the destination vertiport of the determined approach direction.

In accordance with a further aspect of the present disclosure, a provider of services for UAM includes: an information collection unit configured to collect information about a departure vertiport and a destination vertiport and information about terrain, obstacles, and weather between the departure vertiport and the destination vertiport and to receive an event around the departure vertiport from the departure vertiport; a flight plan establishment unit configured to determine a corridor for a UAM aircraft that connects the departure vertiport to the destination vertiport based on the information collected by the information collection unit and to determine a departure direction of the UAM aircraft from the departure vertiport based on the event around the departure vertiport; and a communication device configured to transmit the determined corridor to the UAM aircraft.

In accordance with yet another aspect of the present disclosure, a method of managing, by a vertiport, an approach or departure direction of an urban air mobility (UAM) aircraft to or from the vertiport, includes: collecting an event around the vertiport; providing the collected event to a provider of services for UAM (PSU); receiving an approach or departure direction of the UAM aircraft to or from the vertiport from the provider of services for UAM; and controlling a guidance device of the vertiport, the guidance device being configured to guide take-off and landing of the UAM aircraft based on the approach or departure direction to or from the vertiport.

In one embodiment, the event may include a real-time floating population around the vertiport.

In one embodiment, the event may include at least one of wind speed and wind direction around the vertiport.

In one embodiment, the event may include flight obstacles impeding the flight of the UAM aircraft.

In one embodiment, a surrounding area of the vertiport may be divided into a plurality of areas, and the event may be collected for each of the plurality of areas.

In one embodiment, the approach or departure direction to or from the vertiport may be a direction in which the UAM aircraft passes over one of the plurality of areas.

In one embodiment, the vertiport may include a plurality of take-off and landing areas, wherein the method may further include: determining a take-off and landing area in which the UAM aircraft is to land, among the plurality of take-off and landing areas; and controlling the guidance device based on the determined take-off and landing area.

In accordance with yet another aspect of the present disclosure, a vertiport is configured to perform the method set forth above.

In accordance with yet another aspect of the present disclosure, a method of managing, by a vertiport, an approach or departure direction of an urban air mobility (UAM) aircraft to or from the vertiport includes: collecting an event around the vertiport; determining an approach or departure direction to or from the vertiport based on the collected event; and controlling a guidance device of the vertiport, the guidance device being configured to guide take-off and landing of the UAM aircraft based on the determined approach or departure direction to or from the vertiport.

In one embodiment, the event may include a real-time floating population around the vertiport.

In one embodiment, the event may include at least one of wind speed and wind direction around the vertiport.

In one embodiment, the event may include flight obstacles impeding flight of the UAM aircraft.

In one embodiment, a surrounding area of the vertiport may be divided into a plurality of areas, and the event may be collected for each of the plurality of areas.

In one embodiment, the approach or departure direction to or from the vertiport may be a direction in which the UAM aircraft passes over one of the plurality of areas.

In one embodiment, the vertiport may include a plurality of take-off and landing areas, wherein the method may further include: determining a take-off and landing area in which the UAM aircraft is to land, among the plurality of take-off and landing areas; and controlling the guidance device based on the determined take-off and landing area.

In accordance with yet another aspect of the present disclosure, a vertiport includes: a sensor configured to collect an event around the vertiport; at least one take-off and landing area configured to allow an urban air mobility (UAM) aircraft to take off therefrom and land therein; and a guidance device configured to guide take-off and landing of the UAM aircraft. The vertiport includes: a control device configured to determine an approach or departure direction of the UAM aircraft to or from the vertiport based on the collected event and to control the guidance device based on the determined approach or departure direction.

In one embodiment, the sensor may include a camera configured to detect at least one of a real-time floating population around the vertiport and flight obstacles impeding flight of the UAM aircraft.

In one embodiment, the sensor may include a sensor configured to detect at least one of wind speed and wind direction around the vertiport.

In one embodiment, the guidance device may include a guidance device configured to notify the UAM aircraft of the determined approach or departure direction.

In one embodiment, a surrounding area of the vertiport may be divided into a plurality of areas, and the sensor may be disposed corresponding to each of the plurality of areas.

In accordance with yet another aspect of the present disclosure, a vertiport includes: a sensor configured to collect an event around the vertiport; at least one take-off and landing area configured to allow an urban air mobility (UAM) aircraft to take off therefrom and land therein; a guidance device configured to guide take-off and landing of the UAM aircraft; a communication device configured to provide the collected event to a provider of services for UAM and to receive an approach or departure direction of the UAM aircraft from the provider of services for UAM; and a control device configured to control the guidance device based on the approach or departure direction.

In accordance with yet another aspect of the present disclosure, a UAM operation system includes: a provider of services for UAM (PSU) configured to determine a corridor for an urban air mobility (UAM) aircraft; a vertiport including at least one take-off and landing area configured to allow the UAM aircraft to take off therefrom and land therein and a guidance device configured to guide take-off and landing of the UAM aircraft; and a UAM operator configured to receive the determined corridor and operate the UAM aircraft based thereon. The vertiport collects an event around the vertiport and sends the collected event to the provider of services for UAM, and the provider of services for UAM determines an approach direction to the vertiport based on the collected event and sends the determined approach direction to the vertiport, and the vertiport controls the guidance device based on the determined approach direction.

In one embodiment, the event may include a real-time floating population around the vertiport.

In one embodiment, the event may include at least one of wind speed and wind direction around the vertiport.

In one embodiment, the event may include flight obstacles impeding the flight of the UAM aircraft.

In one embodiment, a surrounding area of the vertiport may be divided into a plurality of zones and the event may be collected for each of the plurality of zones.

In accordance with yet another aspect of the present disclosure, a UAM operation method includes: receiving a flight plan from a provider of services for UAM, the flight plan including a destination vertiport and a corridor; operating a UAM aircraft based on the flight plan; receiving an approach direction to the destination vertiport; and guiding the UAM aircraft to approach the destination vertiport based on the approach direction and to land at the destination vertiport.

In one embodiment, the step of receiving an approach direction to the destination vertiport may include receiving the approach direction from the provider of services for UAM.

In one embodiment, the step of receiving an approach direction to the destination vertiport may include receiving the approach direction from the destination vertiport.

In one embodiment, the destination vertiport may include a plurality of take-off and landing areas, wherein the UAM operation method may further include: receiving guidance for a take-off and landing area in which the UAM aircraft is to land, among the plurality of take-off and landing areas.

### [Advantageous Effects]

Embodiments of the present disclosure enable safer flight for a UAM aircraft by managing approach/departure directions of the UAM aircraft to/from a vertiport using dynamic events around the vertiport.

In addition, embodiments of the present disclosure enable effective risk management against unexpected accidents when a UAM aircraft takes off from a vertiport or lands at the vertiport.

In addition, embodiments of the present disclosure enable provision of efficient corridors when a UAM aircraft takes off from a vertiport or lands at the vertiport.

### [Description of Drawings]

FIG. 1 is a conceptual block diagram of a UAM operation system according to one embodiment of the present disclosure.
FIG. 2 is a conceptual diagram illustrating operation of UAM aircraft according to one embodiment of the present disclosure.
FIG. 3a to FIG. 3c are exemplary diagrams illustrating operation of a vertiport according to one embodiment of the present disclosure.
FIG. 4 is a schematic diagram of a vertiport according to one embodiment of the present disclosure.
FIG. 5 is an exemplary diagram illustrating changes of approach/departure directions of a UAM aircraft to/from a vertiport according to one embodiment of the present disclosure.
FIG. 6 is a flowchart of a process of determining an approach direction of a UAM aircraft to a vertiport according to one embodiment of the present disclosure.
FIG. 7 is a block diagram illustrating devices that may be commonly included in a vertiport (vertiport operator), a provider of services for UAM, or a UAM operator, according to one embodiment of the present disclosure.

### [Best Mode]

Hereinafter, embodiments of the present disclosure will be described in detail with reference to the accompanying drawings such that the present disclosure can be easily implemented by those skilled in the art. It should be understood that the present disclosure may be embodied in different ways and is not limited to the following embodiments.

In the drawings, portions irrelevant to the description will be omitted for clarity. Like components will be denoted by like reference numerals throughout the specification.

As used herein, the terms "includes", "comprises", "including" and/or "comprising" specify the presence of stated features, steps, operations, elements, and/or components, but do not preclude the presence or addition of one or more other features, steps, operations, elements, components, and/or groups.

It will be understood that the disclosure described in this disclosure is not intended to be limited to any particular embodiment, and includes various modifications, equivalents, and/or alternatives to the embodiments of this disclosure.

As used herein, the expression "configured to" may be used interchangeably with, for example, "suitable for", "having the capacity to", "designed to", "adapted to", "made to", or "capable of" depending on the context. The expression "configured (or set up) to" may not necessarily mean "specifically designed (hardware wise) to" in a hardware sense. Instead, in a certain context, the expression "a device configured to" may mean that the device is "capable of" doing something in conjunction with other devices or components.

It will be understood that the related literature described in this disclosure is incorporated herein by reference in its entirety and that a person having ordinary skill in the art will be able to apply what is described in the related literature to the matters briefly described herein.

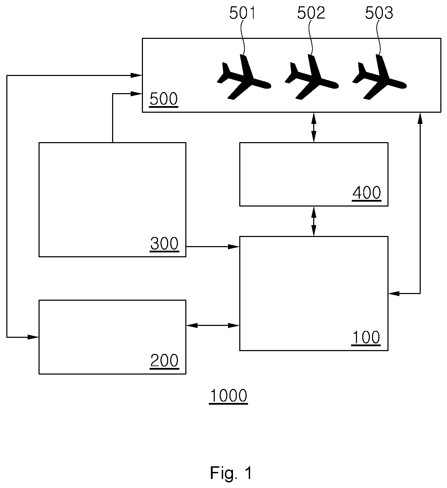

FIG. 1 is a conceptual block diagram of a UAM operation system 1000 according to one embodiment of the present disclosure. Referring to FIG. 1, the UAM operation system 1000 includes a provider of services for UAM (PSU) 100, a vertiport operator 200, a supplemental data service provider 300, a UAM operator 400, and a UAM fleet 500.

In one embodiment, the PSU 100 exchanges necessary information with the vertiport operator 200, the supplemental data service provider 300, the UAM operator 400, the UAM fleet 500, other stakeholders (not shown), and air traffic controllers (not shown). The PSU 100 may share navigation safety information with the vertiport operator 200, the supplemental data service provider 300, the UAM operator 400, the UAM fleet 500, other stakeholders, and air traffic controllers and may manage traffic flow. The PSU 100 may approve flight plans of UAM aircraft 501, 502, 503 and may manage corridors for the UAM aircraft 501, 502, 503. For example, the PSU 100 may send corridor information to the UAM aircraft 501, 502, 503. The PSU 100 may check safety of a new flight plan submitted by the UAM operator 400 by comprehensive analysis of previously approved other flight plans and navigation support information to approve the flight plan or to adjust the flight plan through cooperation with the UAM operator 400. The PSU 100 may provide real-time traffic management services by aggregating UAM surveillance data, real-time operation data of the UAM craft 501, 502, 503, and user data from other national airspace systems and may share related information with stakeholders as needed. Other stakeholders may access UAM operation information (such as UAM aircraft identification information, flight trajectory, and the like) for public interest purposes. This information is provided by the PSU 100. When there is a need to temporarily restrict navigation of UAM aircraft over a specific region for public safety due to the necessity of fire suppression or holding large-scale outdoor events, other stakeholders responsible for public services may notify the PSU 100 of these navigation restrictions.

In one embodiment, the vertiport operator 200 may provide information, such as vertiport availability, the operational state of UAM aircraft, real-time capacity changes, and vertiport zone surveillance data, to the PSU 100 and the UAM operator 400. This information may be utilized for fight planning by the UAM operator 400, flight plan approval by the PSU 100, and provision of take-off/landing management and separation services. The PSU 100 may provide more efficient traffic management services by applying information about real-time vertiport capacity changes to demand-capacity management. The vertiport operator 200 may receive flight plans or real-time flight information (estimated time of arrival and the like) from the PSU 100 and the UAM operator 400 in real time and may utilize this information for efficient vertiport operation. The vertiport operator 200 may directly communicate with a pilot within a vertiport zone (including during the take-off and landing process) for safe and efficient UAM operation.

In one embodiment, the supplemental data service provider 300 may collect navigation support information, such as terrain, obstacles, and weather, and may transmit the navigation support information to the PSU 100. In addition, the supplemental data service provider 300 may collect navigation support information, such as terrain, obstacles, and weather, and may transmit the navigation support information directly to the UAM operator 400 and/or the UAM aircraft 501, 502, 503.

In one embodiment, the UAM operator 400 obtains operation information (corridor availability, take-off and landing area availability at points of departure and destination) and navigation safety information (weather, restricted airspace, and the like) from the PSU 100, the supplemental data service provider 300, and the vertiport operator 200 and applies the obtained information to flight planning. The UAM operator 400 may provide the PSU 100 with flight plans and real-time navigation management information and may receive approved flight plans, navigation safety information, and traffic management service information.

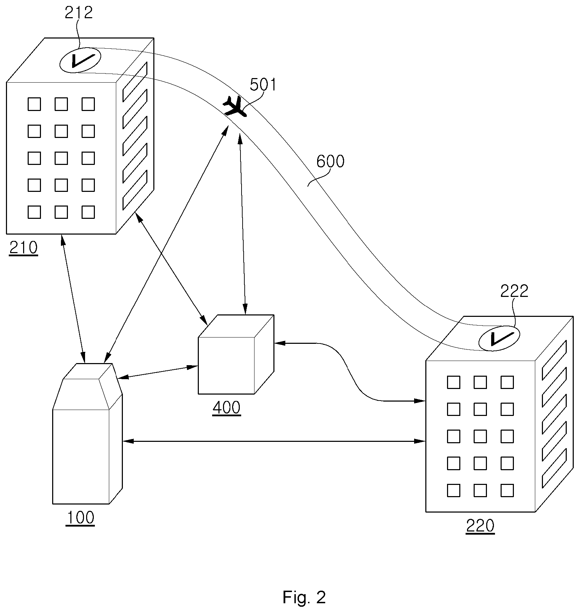

FIG. 2 is a conceptual diagram illustrating operation of UAM aircraft according to one embodiment of the present disclosure. Referring to FIG. 2, a UAM aircraft 501 travels from a first vertiport 212 of a first building 210 to a second vertiport 222 of a second building 220 along a corridor 600. The corridor 600 may be determined by the PSU 100. The determined corridor 600 may be transmitted to the UAM aircraft 501 through the UAM operator 400 or may be transmitted to the UAM aircraft 501 directly from the PSU 100. The second building 220 is set as a destination of the UAM aircraft 501 for illustrative purposes only.

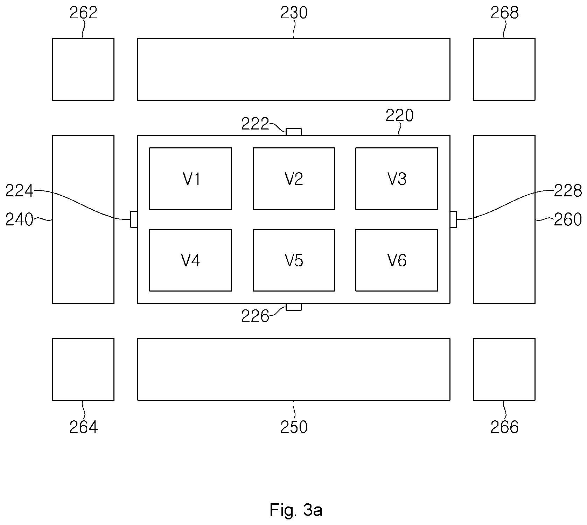

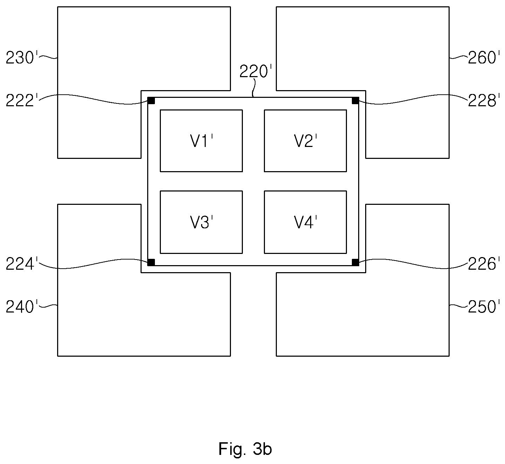

In one embodiment, the PSU 100 may receive events around the first building 210 and the second building 220 from each of the first building 210 and the second building 220. In one embodiment, the event may include changes around a building. For example, the event may include changes in number of people around the building, changes in number of vehicles around the building, changes to exterior walls of the building (for example, building cleaning, sunlight reflection, and the like), a change of take-off and landing area, wind speed and wind direction around the building, precipitation status around the building, low-altitude flight obstacles (construction facilities, power lines, cranes, flocks of birds, and the like), and the like. A surrounding area of the building may be divided into a plurality of areas and collection of the events may be confined to the plurality of areas. Details regarding this will be described further below. Each of the first building 210 and the second building 220 may include a sensor (not shown in FIG. 2) (for example, 222 to 228 of FIG. 3a, 222' to 228' of FIG. 3b) configured to detect events therearound. In another embodiment, the event may include a judgement related to navigation of the UAM aircraft 501 that is presented based on the changes around the building. For example, the event may include an opinion regarding a change of approach/departure directions of the UAM aircraft 501 or a change of take-off and landing area to be used by the UAM aircraft 501.

In one embodiment, the PSU 100 may change approach/departure directions of the UAM aircraft 501 to/from the vertiport and/or may change a take-off/landing area to be used by the UAM aircraft 501 for landing based on the received events. The PSU 100 may send the new approach/departure directions (not shown) and/or the new take-off/landing area to the vertiport operator 200, the UAM operator 400, and/or the UAM aircraft 501. The UAM operator 400 may transmit the received new approach/departure directions and/or the new take-off/landing area to the UAM aircraft 501. The UAM aircraft 501 may continue navigation based on the new approach/departure directions and/or the new take-off/landing area received from the PSU 100.

In another embodiment, the first building 210 and the second building 220 may send events therearound to the UAM operator 400. The UAM operator 400 may change approach/departure directions of the UAM aircraft 501 to/from the vertiport and/or may change a take-off/landing area to be used by the UAM aircraft 501 for landing based on the received events. The UAM operator 400 may send the new approach/departure directions (not shown) and/or the new take-off/landing area to the UAM aircraft 501. The UAM aircraft 501 may continue navigation based on the new approach/departure directions and/or the new take-off/landing area received from the UAM operator 400.

In a further embodiment, the first building 210 and the second building 220 may send events therearound to the UAM aircraft 501. The UAM aircraft 501 may change approach/departure directions of the UAM aircraft 501 to/from the vertiport and/or may change a take-off/landing area to be used by the UAM aircraft 501 for landing based on the received events.

FIG. 3a to FIG. 3c are exemplary views illustrating operation of a vertiport according to one embodiment of the present disclosure. Referring to FIG. 3a and FIG. 3b, take-off/landing areas V1 to V6; V1 to V4 are disposed on the rooftop of a building 220; 220', and the building has a rectangular shape, as viewed from above. It will be understood that the number and arrangement of take-off/landing areas V1 to V6; V1 to V4' and the shape of the building, as viewed from above, are merely illustrative and may be varied in practice.

Referring to FIG. 3a, six take-off/landing areas V1 to V6 are disposed on the rooftop of the rectangular building 220. The building 220 may be provided with cameras 222, 224, 226, 228 configured to detect events around the building 220. The cameras 222, 224, 226, 228 may be disposed to monitor areas opposite the sides of the building 220. For example, the cameras 222, 224, 226, 228 may be disposed on the sides of the building 220, respectively, as shown in FIG. 3a. It will be understood that the number and position of cameras 222, 224, 226, 228 may be adjusted as needed. In addition, it will be understood that the cameras 222, 224, 226, 228 may be disposed at appropriate locations to detect events around the building 220, such as the entrance of the building 220 and the rooftop of the building 220. In addition, it will be understood that the building 220 may be provided with sensors configured to detect events around the building 220, instead of the cameras 222, 224, 226, 228. The cameras 222, 224, 226, 228 may include AI cameras or 3D depth cameras that can detect changes in number of people around the building, changes in number of vehicles around the building, changes to exterior walls of the building, and the like within corresponding areas 230, 240, 250, 260 by analysis of images of the corresponding areas 230, 240, 250, 260. In addition, the sensors may include sensors that can detect wind speed, wind direction, and precipitation status around the building.

In one embodiment, as shown in FIG. 3a, the vertiport operator 200 may collect events occurring within areas 262, 264, 266, 268 corresponding to the corners of the building 220 and areas 230, 240, 250, 260 corresponding to the sides of the building 220 through cameras (or sensors).

In one embodiment, the event may include changes around the building. For example, the event may include changes in number of people around the building, changes in number of vehicles around the building, changes to the exterior walls of the building (for example, building cleaning, sunlight reflection, and the like), a change of take-off/landing area, wind speed and wind direction around the building, precipitation status around the building, low-altitude flight obstacles (construction facilities, power lines, cranes, flocks of birds, and the like), and the like. Here, the change of take-off/landing area means, for example, that the UAM aircraft 501 was initially scheduled to use V1 but is rerouted to a different take-off/landing area. There are various reasons for the change of take-off/landing area. For example, the reason for the change of take-off/landing area may include a situation in which the UAM aircraft 510 cannot take off/land at an original take-off/landing area due to, for example, malfunction or the presence of other objects (obstacles).

It will be understood that the areas 230 to 260, 262 to 268 shown in FIG. 3a, where events are collected, are merely illustrative and may be varied as needed. For example, as shown in FIG. 3b, the building 220 may have four take-off/landing areas V1' to V4', and a surrounding area of the building where events are collected may be divided into areas 230', 240', 250', 260' including the vicinity of the corners of the building 220'. In addition, cameras or sensors 222' to 228' may also be disposed around the corners of the building 210'.

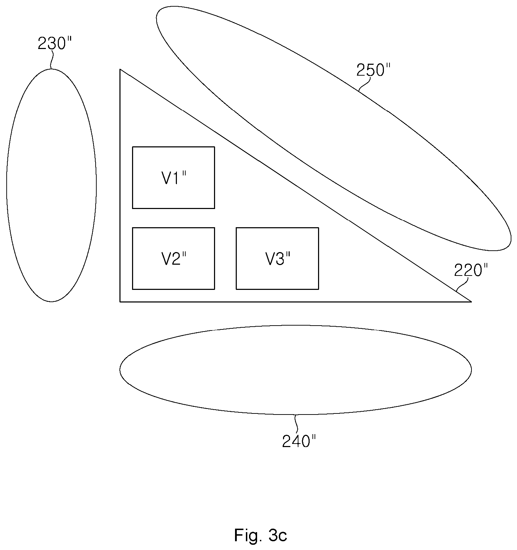

In addition, the area where events are collected may vary depending on the shape of the building. FIG. 3c is another exemplary view illustrating operation of the vertiport according to one embodiment of the present disclosure. FIG. 3c shows a case where the shape of the building 220" is triangular. Here, the vertiport operator 200 may collect events in areas 230", 240", 250" corresponding to the sides of the building 220" through cameras and/or sensors.

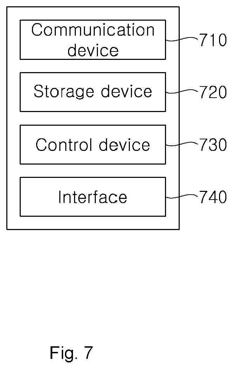

FIG. 7 is a block diagram of devices that may be commonly included in the provider of services for UAM 100, the vertiport operator 200, 600, or the UAM operator 400, according to one embodiment of the present disclosure. The provider of services for UAM 100, the vertiport operator 200, 600, or the UAM operator 400 may include a communication device 710, a storage device 720, a control device 730, and an interface 740.

The communication device 710 is configured to enable the provider of services for UAM 100, the vertiport operator 200, 600, or the UAM operator 400 to communicate with external devices and receive/transmit information. The communication device 710 may communicate via a network established according to Global System for Mobile communication (GSM), Code Division Multiple Access (CDMA), High Speed Downlink Packet Access (HSDPA), High Speed Uplink Packet Access (HSUPA), Long Term Evolution (LTE), Long Term Evolution-Advanced (LTE-A), Wireless LAN (WLAN), Wi-Fi, Wi-Fi-Direct, Digital Living Network Alliance (DLNA), Wireless Broadband (WiBro), World Interoperability for Microwave Access (WiMAX), or 5G wireless communication. However, it will be understood that the present disclosure is not limited thereto and the network may include a network established according to any data transmission protocol that may be developed in the future. In addition, the network may include any wired/wireless data communication network.

The storage device 720 includes a computer-readable storage medium, such as data storage devices that can be accessed by a computing device and provide permanent storage for data and executable instructions (for example, software applications, programs, functions, and the like). Examples of the storage device 720 include volatile and non-volatile memories, fixed and removable media devices, and any suitable memory device or electronic data storage that holds data for access by a computing device. A database 120 may include various implementations of random access memory (RAM), read-only memory (ROM), flash memory, and other types of storage media in various memory device configurations. The storage device 720 is configured to store a software application that may be implemented as executable software instructions (for example, computer-executable instructions) or modules that are executable by a processor.

The control device 730 is configured to control operation of the provider of services for UAM 100, the vertiport operator 200, 600, or the UAM operator 400. The control device 730 may perform the methods provided herein upon execution of the instructions stored in the storage device 720.

The interface 740 may be configured to receive input from an administrator of the provider of services for UAM 100, the vertiport operator 200, 600, or the UAM operator 400.

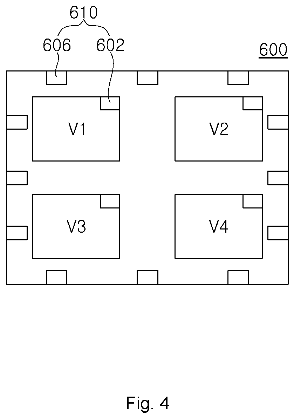

FIG. 4 is a schematic diagram of a vertiport 600 according to one embodiment of the present disclosure. Referring to FIG. 4, the vertiport 600 includes take-off/landing areas V1 to V4 and a guidance device 610. It will be understood that the vertiport 600 may further include a control device, a storage device, and a communication device for operation of the vertiport 600, as described above.

The guidance device 610 may be configured to guide UAM aircraft taking off from or landing on the take-off/landing areas V1 to V4. In one embodiment, the guidance device 610 may be configured to support visual flight rules (VFR) navigation and/or instrument flight rules (IFR) navigation. VFR navigation is a method in which a pilot navigates a UAM aircraft by visually confirming approach/departure directions to/from the vertiport. For example, for VFR navigation, the guidance device 610 may include a lamp or the like that can provide visual cues to the pilot. Unlike VFR navigation, IFR navigation is a method in which a pilot navigates the UAM aircraft by relying on onboard instruments. For example, for IFR navigation, the guidance device 610 may include an instrument landing system (ILS). The UAM aircraft may receive information from the guidance device 610 and may provide information for IFR navigation to the pilot.

In one embodiment, the guidance device 610 may include an antenna, a radar system, a lamp, and the like. The guidance device 610 may be configured to notify the UAM aircraft of which of the take-off/landing areas V1 to V4 the UAM aircraft is to use for taking off/landing. The guidance device 610 may be configured to notify the UAM aircraft of which direction the UAM aircraft is to follow to approach or leave the vertiport.

In one embodiment, the guidance device 610 may include a first guidance device 602 pointing to each of the take-off/landing areas V1 to V4 and a second guidance device 604 disposed on a building where the vertiport 600 is situated. The first guidance device 602 may be configured to notify the UAM aircraft of which of the take-off/landing areas V1 to V4 the UAM aircraft is to use for taking off/landing. For example, the first guidance device may be disposed at each of the take-off/landing areas V1 to V4. The second guidance device 604 may be configured to notify the UAM aircraft of which direction the UAM aircraft is to follow to approach or leave the vertiport 600. For example, as shown in FIG. 4, the second guidance device 604 may be disposed on each side of the vertiport 600 to notify the UAM aircraft of which direction the UAM aircraft is to follow to approach the vertiport 600. Alternatively, the second guidance device 604 may be disposed corresponding to each area where events are collected to notify the UAM aircraft of which one of the areas the UAM aircraft is to pass over. The second guidance device 604 may provide information required for the UAM aircraft to navigate using instrument flight rules towards the direction the UAM aircraft is to follow to approach the vertiport 600.

### Events around building collected by vertiport

In one embodiment, events around a building that are collected by the vertiport may include information that is difficult for the PSU to collect. The events around the building that are collected by the vertiport are events that can affect take-off/landing of a UAM aircraft and are information that can only be collected by the vertiport (or the building where the vertiport is situated).

In one embodiment, the events around the building that are collected by the vertiport may include a real-time floating population around the building. The vertiport may collect data on a floating population around the building in real time. The vertiport may divide a surrounding area of the building into, for example, areas opposite the sides of the building and may collect data on a floating population within each area in real time. The data on the floating population around the building may be gathered using sensors disposed on the building where the vertiport is situated.

In one embodiment, the events around the building that are collected by the vertiport may include wind information including wind direction and/or wind speed. Generally, the PSU may consider meteorological information including weather and wind information upon determining a corridor connecting vertiports. However, such meteorological information is generally limited to weather information between vertiports, making it difficult to accurately reflect wind information around the building where the vertiport is situated. Since wind conditions between buildings in an urban area may differ from the meteorological information between vertiports, the vertiport needs to collect data on wind direction, wind speed, and the like around the building.

In one embodiment, the events around the building that are collected by the vertiport may include flight obstacles. The vertiport may collect data on flight obstacles, including information about particular objects, such as facilities around the building (for example, construction facilities, power lines, cranes, and the like) and flocks of birds, in real time. Data on such flight obstacles is easy for the vertiport to collect, but may be challenging for the PSU to acquire.

### Determination of approach or departure direction based on events collected by vertiport

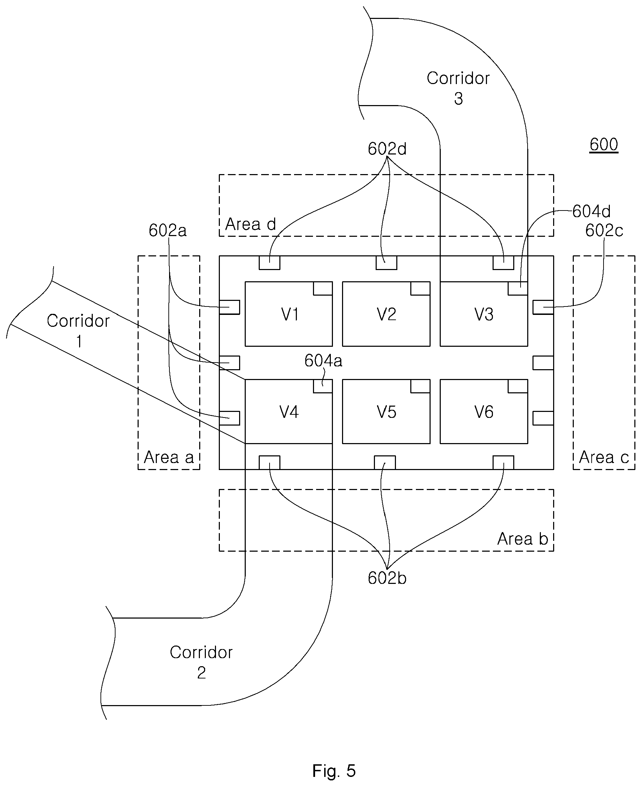

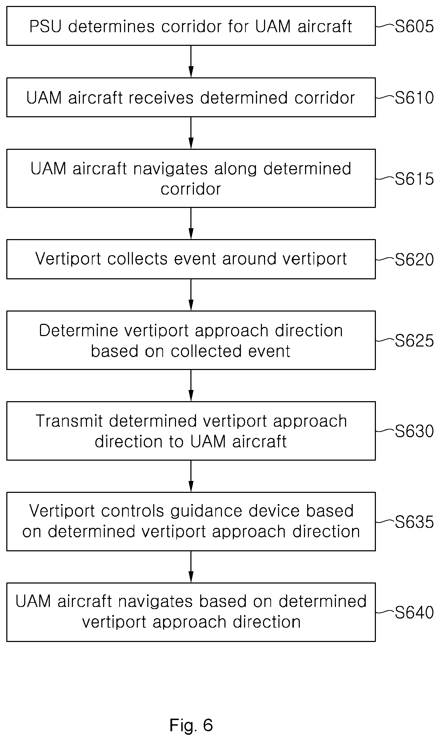

FIG. 5 is an exemplary view illustrating a change of approach/departure directions of a UAM aircraft to/from a vertiport according to one embodiment of the present disclosure. FIG. 6 is a flowchart of the process of determining an approach direction to a vertiport according to one embodiment of the present disclosure.

Referring to FIG. 1, FIG. 2, and FIG. 6, in Block S605, the PSU 100 determines a corridor for a UAM aircraft. The PSU 100 may determine a corridor for the UAM aircraft by comprehensive analysis of previously approved flight plans for other UAM aircraft and navigation support information (for example, meteorological information, vertiport capacity, and the like). In Block S610, the UAM aircraft 501 may receive the determined corridor from the PSU 100. In Block S615, the UAM aircraft 501 may navigate from the vertiport 212 to the vertiport 222 along the determined corridor (for example, 600 of FIG. 2). In one embodiment, the determined corridor may or may not include a take-off/landing area to be used by the UAM aircraft for landing at the vertiport 222. When the determined corridor does not include a take-off/landing area to be used for landing, the vertiport 222 may notify the UAM aircraft 501 of a take-off/landing area to be used for landing before the UAM aircraft 501 arrives at the vertiport 222.

Referring to FIG. 5, the UAM aircraft 501 (see FIG. 2) is assumed to arrive at a take-off/landing area V4 of the vertiport 600 along Corridor 1. Corridor 1 may or may not include an approach direction to the destination vertiport 600.

In one embodiment, in Block S620, the vertiport 600 (or the vertiport operator or the building) may collect events around the vertiport 600, as described above. The vertiport 600 may collect events for each area (Area 'a' to Area 'd').

In Block S625, an approach direction to the vertiport 600 may be determined based on the events collected by the vertiport 600. An entity responsible for determination of the approach direction to the vertiport 600 may include at least one of the PSU 100, the vertiport 600, the UAM operator 400, and the UAM aircraft 501. That is, in one embodiment, the PSU 100 may receive the events collected by the vertiport 600 from the vertiport 600 and may determine the approach direction to the vertiport 600 based on the received events. In one embodiment, the vertiport 600 may determine the approach direction to the vertiport 600 based on the events collected by the vertiport 600. In one embodiment, the UAM aircraft 501 or the UAM operator 400 may receive the events collected by the vertiport 600 from the vertiport 600 and may determine the approach direction to the vertiport 600 based on the received events.

To this end, each of the PSU 100, the vertiport 600, the UAM operator 400, and the UAM aircraft 501 may further include a control device 730, a storage device 720, and a communication device 710, as shown in FIG. 7. The storage devices of the PSU 100, the vertiport 600, the UAM operator 400, and the UAM aircraft 501 may store predetermined criteria for determining the approach direction, and the control devices of the PSU 100, the vertiport 600, the UAM operator 400, and the UAM aircraft 501 may determine the approach direction to the vertiport based on the preselected criteria and the collected/received events.

In one embodiment, a determination may be made that it is difficult to land in the original take-off/landing area V4 through Area 'a' due to an event occurring in Area 'a'. For example, the control device of at least one of the PSU 100, the vertiport 600, the UAM operator 400, and the UAM aircraft 501 may determine that navigation of the UAM aircraft through Area 'a' is unsafe when the number of people in Area 'a' is greater than a predetermined reference value, when wind direction and/or wind speed in Area 'a' does not meet a predetermined criterion, or when an obstacle is present in Area 'a'.

An entity responsible for such determination may include at least one of the PSU 100, the vertiport 600, the UAM operator 400, and the UAM aircraft 501. For example, the control device of at least one of the PSU 100, the vertiport 600, the UAM operator 400, and the UAM aircraft 501 may determine that the UAM aircraft should approach the vertiport 600 through Area 'b', based on events having occurred in the other areas, that is, Area 'b', Area 'c', and Area 'd'. For example, the control device of at least one of the PSU 100, the vertiport 600, the UAM operator 400, and the UAM aircraft 501 may determine that the UAM aircraft should approach the vertiport 600 through Area 'b' in consideration of at least one factor among population, wind direction, wind speed, and obstacles in Area 'b', Area 'c', and Area 'd'.

For example, among the areas, areas where the number of people exceeds a predetermined reference value, wind direction and/or wind speed does not meet a preselected criterion, or obstacles are present may be excluded from the approach direction of the UAM aircraft.

Here, there may be no change of take-off and landing area (that is, the original take-off and landing area V4 may be maintained). That is, in Block S625, the approach direction to the vertiport 600 may be changed. Generally, a change of corridor does not necessarily entail a change of approach direction to the vertiport 600. However, a change of approach direction to the vertiport 600 always entails a change of corridor.

In one embodiment, a determination may be made that it is difficult to land in the take-off and landing area V4 through Area 'a' due to an event having occurred in Area 'a'. An entity responsible for such determination may include at least one of the PSU 100, the vertiport 600, the UAM operator 400, and the UAM aircraft 501. Based on events having occurred in the other areas, that is, Area 'b', Area 'c', and Area 'd', a determination may be made that the UAM aircraft should approach the vertiport 600 through Area 'd'. Here, the original take-off and landing area V4 may be maintained, or a new take-off and landing area V3 may be selected, as shown in FIG. 5. In one embodiment, a change of take-off and landing area may be dependent on a change of approach direction. When there is a change of approach direction, as shown in FIG. 5, a take-off and landing area to be used by the UAM aircraft may be changed from V4 to V3 since the take-off and landing area V3 is closer to the new approach direction than the take-off and landing area V4. Alternatively, a change of take-off and landing area may not be dependent on a change of approach direction. That is, it will be understood that there may be no change of take-off and landing area even when there is a change of approach direction.

In one embodiment, when one of the PSU 100, the UAM operator 400, and the UAM aircraft 501 determines or changes an approach direction to the vertiport, the determined approach direction or the new approach direction is transmitted to the vertiport 600. In one embodiment, when one of the PSU 100, the UAM operator 400, and the UAM aircraft 501 determines or changes a take-off and landing area to be used by the UAM aircraft, the determined take-off and landing area or the new take-off and landing area is transmitted to the vertiport 600.

Although the areas 262, 264, 266, 268 corresponding to the corners of the building (see FIG. 3a) are not shown in FIG. 5, it will be understood that events in the areas 262, 264, 266, 268 corresponding to the corners may also be collected and the approach direction to the vertiport 600 may be determined based on the collected events.

The approach direction to the vertiport 600, as determined in Block S630, is transmitted to the UAM aircraft 501. In one embodiment, the determined approach direction to the vertiport 600 may be transmitted to the UAM aircraft 501 through the PSU 100. Alternatively, the determined approach direction to the vertiport 600 may be transmitted to the UAM aircraft 501 through the vertiport 600. Alternatively, the determined approach direction to the vertiport 600 may be transmitted to the UAM aircraft 501 through the UAM operator 400.

In Block S635, the vertiport 600 may control at least one of the guidance devices 602, 604 (see FIG. 4); 602a, 602b, 602c, 602d, 604a, 604d (see FIG. 5) based on the determined approach direction to the vertiport 600.

In one embodiment, when a corridor for the UAM aircraft is changed from Corridor 1 to Corridor 2 based on the determined approach direction, the vertiport 600 may control at least one of the guidance device 602a and the guidance device 602b to guide the UAM aircraft 501 to approach the vertiport 600 based on the determined approach direction. For example, when the guidance device 602b includes a lamp, the vertiport 600 may control the guidance device 602b to flicker or light up. In one embodiment, when a corridor for the UAM aircraft is changed from Corridor 1 to Corridor 3 based on the determined approach direction, the vertiport 600 may control at least one of the guidance devices 602a, 604a, 602d, 604d to guide the UAM (501) to approach the vertiport 600 based on the determined approach direction. For example, when the guidance devices 602d, 604d include lamps, the vertiport 600 may control the guidance devices 602d, 604d to flicker or light up.

In one embodiment, the vertiport 600 may control at least one of the guidance device 602a and guidance device 602b to provide the UAM aircraft 501 with information for IFR navigation of the UAM aircraft 501. The UAM aircraft 501 may be configured to transmit instrument information to a pilot of the UAM craft 501 based on the received information.

In Block S640, the UAM aircraft 501 navigates based on the determined approach direction to approach the vertiport 600.

Although the description above has been focused on landing, it will be understood that the scope of the disclosure also includes changing a departure direction of the UAM aircraft during take-off based on events around the vertiport. For example, the departure direction from the vertiport 600 may be determined based on events collected by the vertiport 600. An entity responsible for determination of the departure direction from the vertiport 600 may include at least one of the PSU 100, the vertiport 600, the UAM operator 400, and the UAM aircraft 501. That is, in one embodiment, the PSU 100 may receive the events collected by the vertiport 600 from the vertiport (600) and may determine the departure direction from the vertiport 600 based on the received events. In one embodiment, the vertiport 600 may determine the departure direction from the vertiport 600 based on the events collected by the vertiport 600. In one embodiment, the UAM aircraft 501 or the UAM operator 400 may receive the events collected by the vertiport 600 from the vertiport 600 and may determine the departure direction from the vertiport 600 based on the received events.

In one embodiment, the departure direction may influence selection of a corridor for the UAM aircraft. Referring again to FIG. 5, one of Corridor 1 to Corridor 3 may be selected depending on which area the UAM aircraft is to pass over.

Herein, the corridor may refer to a rough path connecting buildings (vertiports). That is, the corridor only includes a path connecting a departure vertiport to a destination vertiport and does not include a direction the UAM aircraft is to follow to approach or leave the vertiport. Herein, the departure direction may refer to a direction the UAM aircraft leaving a building (or vertiport) is to follow to enter a selected corridor. Herein, the approach direction may refer to a direction the UAM aircraft navigating to a destination vertiport along the corridor is to follow to approach a building (or vertiport) and land in a specific take-off and landing area.

In one embodiment, the provider of services for UAM 100 may include a communication device 710, a storage device 720, a control device 730, and an interface 740, as described above. Upon execution of instructions stored in the storage device 720, the control device 730 may function as an information collection unit configured to collect information required for the flight of the UAM aircraft and a flight plan establishment unit configured to establish a flight plan based on the collected information. The information collection unit may collect UAM corridor information for the vertiport operator 200. The information collection unit may receive vertiport availability, the current operational state of UAM aircraft, real-time capacity changes, and vertiport zone surveillance data from the vertiport operator 200. The information collection unit may collect navigation support information, including at least one of terrain. obstacles, and weather, from the supplemental data service provider 300. The information collection unit may receive events around the building from the vertiport operator 200, wherein the event includes at least one of changes in number of people around the vertiport, changes in number of vehicles around the vertiport, changes to exterior walls of the building where the vertiport is situated, a change of take-off and landing area at the vertiport, wind speed and wind direction around the building, precipitation status around the building, and low-altitude flight obstacles around the building. The flight plan establishment unit may establish a flight plan of the UAM aircraft based on one of the information and events described above.

In one embodiment, the information collection unit may receive information about a departure vertiport and a destination vertiport. The information collection unit may receive information about terrain, obstacles, and weather (including wind direction and wind speed) between the departure vertiport and the destination vertiport. The information collection unit may receive information about the distribution of population and the real-time number of people between the departure vertiport and the destination vertiport. The flight plan establishment unit may select a corridor for the UAM aircraft that connects the departure vertiport to the destination vertiport based on the information received by the information collection unit and may notify the UAM operator of the selected corridor. After the corridor for the UAM aircraft is selected, and while the UAM aircraft is in flight, the information collection unit may receive events around the building from the destination vertiport, wherein the event includes at least one of a change of take-off and landing area at the destination vertiport, wind speed and wind direction around the destination vertiport, precipitation status around the destination vertiport, and low-altitude flight obstacles around the destination vertiport. The flight plan establishment unit may determine an approach direction of the UAM aircraft to the destination vertiport based on the events around the building and may notify the UAM operator of the determined approach direction.

The methods according to the present disclosure may be implemented as code that can be written on a processor-readable recording medium and thus read by a processor of a server, system, equipment, computer, or integrated control device which is used by a certain entity. The processor-readable recording medium may be any type of recording device in which data is stored in a processor-readable manner. The processor-readable recording medium may include, for example, ROM, RAM, CD-ROM, a magnetic tape, a floppy disk, and an optical data storage device, and may be implemented in the form of a carrier wave transmitted over the Internet. In addition, the processor-readable recording medium may be distributed over a plurality of computer systems connected to a network such that processor-readable code is written thereto and executed therefrom in a decentralized manner.

The devices and methods described above may be implemented by a hardware component, a software component, and/or a combination thereof. For example, the devices and components described in the embodiments may be implemented using one or more general-purpose computers or special-purpose computers, such as a processor, a controller, an arithmetic logic unit (ALU), a digital signal processor, a microcomputer, a field programmable array (FPA), a programmable logic unit (PLU), a microprocessor, or any other device capable of executing and responding to instructions. The processing device may execute an operating system (OS) and one or more software applications executable on the operating system. The processing device may also access, store, manipulate, process, and generate data in response to execution of software. For convenience of understanding, the processing device is sometimes described as utilizing a single processing element, but a person having ordinary skill in the art will recognize that the processing device may include multiple processing elements and/or multiple types of processing elements. For example, the processing device may include multiple processors, or may include one processor and one controller. Further, another processing configuration such as a parallel processor is possible.

The software may include computer programs, code, instructions, or a combination thereof. The software may configure the processing device to operate as desired, or may independently or collectively instruct the processing device. The software and/or data may be permanently or temporarily embodied in any type of machine, component, physical device, virtual equipment, computer storage medium or device, or transmitted signal wave, for interpretation by the processing device or for providing instructions or data to the processing device. The software may also be distributed across networked computer systems to be stored or executed in a decentralized manner. The software and the data may be stored on one or more computer-readable recording media.

The embodiments of the present disclosure may be practiced in a distributed computing environment where certain tasks are performed by remote processing devices connected via a communication network. In the distributed computing environment, program modules may be located on both local and remote memory storage devices.

While the preferred embodiments of the present disclosure have been described with reference to the drawings as above, it should be understood that the foregoing embodiments are provided for illustration only and are not to be in any way construed as limiting the present disclosure, and that various modifications, changes, alterations, and equivalent embodiments can be made by those skilled in the art without departing from the spirit and scope of the disclosure. For example, even when the disclosure described herein is performed in a different order than described herein and/or the components of the described systems, structures, devices, circuits, etc. are combined or assembled in a different form than described herein or are substituted or replaced by other components or equivalents thereto, suitable results can be achieved.

Therefore, other implementations, other embodiments, and equivalents to the appended claims fall within the scope of the claims.

## Claims

1. A method of managing, by a vertiport, approach/departure directions of an urban air mobility (UAM) aircraft to/from the vertiport, the method comprising:
collecting an event around the vertiport;
providing the collected event to a provider of services for UAM (PSU);
receiving an approach or departure direction of the UAM aircraft to or from the vertiport from the provider of services for UAM; and
controlling a guidance device of the vertiport, the guidance device being configured to guide take-off and landing of the UAM aircraft based on the approach or departure direction to or from the vertiport.

2. The method according to claim 1, wherein the event comprises a real-time floating population around the vertiport.

3. The method according to claim 1, wherein the event comprises at least one of wind speed and wind direction around the vertiport.

4. The method according to claim 1, wherein the event comprises flight obstacles impeding a flight of the UAM aircraft.

5. The method according to claim 1, wherein a surrounding area of the vertiport is divided into a plurality of areas, and the event is collected for each of the plurality of areas.

6. The method according to claim 5, wherein the approach or departure direction to or from the vertiport is a direction in which the UAM aircraft passes over one of the plurality of areas.

7. The method according to claim 1, wherein
the vertiport comprises a plurality of take-off and landing areas,
the method further comprising:
determining a take-off and landing area in which the UAM aircraft is to land, among the plurality of take-off and landing areas; and
controlling the guidance device based on the determined take-off and landing area.

8. A vertiport configured to perform the method according to claims 1 to 7.

9. A method of managing, by a vertiport, an approach or departure direction of an urban air mobility (UAM) aircraft to or from the vertiport, the method comprising:
collecting an event around the vertiport;
determining an approach or departure direction to or from the vertiport based on the event; and
controlling a guidance device of the vertiport, the guidance device being configured to guide take-off and landing of the UAM aircraft based on the determined approach or departure direction to or from the vertiport.

10. The method according to claim 9, wherein the event comprises a real-time floating population around the vertiport.

11. The method according to claim 9, wherein the event comprises at least one of wind speed and wind direction around the vertiport.

12. The method according to claim 9, wherein the event comprises flight obstacles impeding flight of the UAM aircraft.

13. The method according to claim 9, wherein a surrounding area of the vertiport is divided into a plurality of areas, and the event is collected for each of the plurality of areas.

14. The method according to claim 13, wherein the approach or departure direction to or from the vertiport is a direction in which the UAM aircraft passes over one of the plurality of areas.

15. The method according to claim 9, wherein
the vertiport comprises a plurality of take-off and landing areas,
the method further comprising:
determining a take-off and landing area in which the UAM aircraft is to land, among the plurality of take-off and landing areas; and
controlling the guidance device based on the determined take-off and landing area.

16. A vertiport configured to perform the method according to claims 9 to 15.

17. A vertiport comprising:
a sensor configured to collect an event around the vertiport;
at least one take-off and landing area configured to allow an urban air mobility (UAM) aircraft to take off therefrom and land therein;
a guidance device configured to guide take-off and landing of the UAM aircraft; and
a control device configured to determine an approach or departure direction of the UAM aircraft to or from the vertiport based on the collected event and to control the guidance device based on the determined approach or departure direction.

18. The vertiport according to claim 17, wherein the sensor comprises a camera configured to detect at least one of a real-time floating population around the vertiport and flight obstacles impeding flight of the UAM aircraft.

19. The vertiport according to claim 17, wherein the sensor comprises a sensor configured to detect at least one of wind speed and wind direction around the vertiport.

20. The vertiport according to claim 17, wherein the guidance device comprises a guidance device configured to notify the UAM aircraft of the determined approach direction.

21. The vertiport according to claim 17, wherein a surrounding area of the vertiport is divided into a plurality of areas, and the sensor is disposed corresponding to each of the plurality of areas.

22. A vertiport comprising:
a sensor configured to collect an event around the vertiport;
at least one take-off and landing area configured to allow an urban air mobility (UAM) aircraft to take off therefrom and land therein;
a guidance device configured to guide take-off and landing of the UAM aircraft;
a communication device configured to provide the collected event to a provider of services for UAM and to receive an approach or departure direction of the UAM aircraft from the provider of services for UAM; and
a control device configured to control the guidance device based on the approach or departure direction.
